# EUROPEAN PATENT APPLICATION

(11) **EP 1 227 417 A2**
(43) Date of publication of application: **31.07.2002**
(21) Application number: 02250523.4
(22) Date of filing: 25.01.2002
(51) Int. Cl.: G06F 17/30

(54) **Selective viewing of video based on one or more themes**

(30) Priority: 25.01.2001 US 264270 P
(71) Applicant: Ensequence, Inc., Portland, Oregin 97204 (US)
(72) Inventor: Wallace, Michael W., Vancouver, Washington 98683 (US); Acott, Troy Steven, Beaverton, Oregon 97007 (US)
(74) Representative: Nicholls, Michael John

(57) **Abstract**

A method for displaying programmatic content comprising a first step of indexing within a table segments of the programmatic content using at least two possibly overlapping thematic categories, then enabling user selection of at least one of the thematic categories for viewing. The segments of programmatic content are arranged into a video sequence responsive to the user-selected thematic category. The video sequence is then displayed in substantial synchronicity with annotative information associated with a currently viewed segment of the video sequence.

## Description

### BACKGROUND OF THE INVENTION

The present invention relates to a video device for the automatic selective retrieval of possibly non-sequential video segments of a video program, from a single video source, responsive to a viewer's interactive selection of specific themes inherent in the video source, and the display of the selected segments as a seamless video program.

As initially conceived, movies and television programs were intended to be viewed as linear, sequential time experiences, that is, they ran from beginning to end, in accordance with the intent of the creator of the piece and at the pacing determined during the editing of the work. With the advent of recording devices and personal entertainment systems, control over pacing and presentation order fell more and more to the viewer. The videocassette recorder (VCR) provided primitive functionality including pause, rewind, fast forward and fast reverse, thus enabling simple control over the flow of time in the experience of the work. However, the level of control was necessarily crude and limited. With the advent of laser discs, the level of control moved to frame-accurate cuing, thus increasing the flexibility of the viewing experience. However, manual control over such detailed cuing was difficult at best. Thus, Bohrman (U.S. Patent 5,109,482) described a system for computer control over a laser disc player that permitted interactive selection of frame-accurate clips for selective viewing. This system was cumbersome, and required the viewer to preview the video to make the indicated selections. Thus, Abecassis, in a series of patents (U.S. Pat. No. 5,434,678, U.S. Pat. No. 5,589,945, U.S. Pat. No. 5,664,046, U.S. Pat. No. 5,684,918, U.S. Pat. No. 5,69,869, U.S. Pat. No. 5,724,472, U.S. Pat. No. 5,987,211, U.S. Pat. No. 6,011,895, U.S. Pat. No. 6,067,401, and U.S. Pat. No. 6,072,934) provided a means by which 'experts' could view a video in advance, and rate each instant of the video along a plurality of categories related to the maturity rating of the video, such as violence, profanity, bloodshed, nudity, sex, and so forth. Then the viewer could define a set of preferences for each of these categories, and the system would automatically select and/or display a subset of the original video content that matched those preferences.

However, with modern computer technology being increasingly applied to television entertainment systems, systems exist today for transmitting, receiving, storing, retrieving, and displaying compressed digital versions of movies and television programs, with exquisite control over the pacing and ordering of the program material. With this increased capability has arisen an increased desire to personalize the nature of the presentation of entertainment material, and to view and review creative works for the purpose of study, analysis and enjoyment. The requirements of these latter activities extend beyond the simple filtering capabilities envisioned and described by Abecassis and Bohrman, and exceed the simple censorship analysis described by Von Kohorn in U.S. Patent 4,520,404.

An example of a more complex approach to this subject is Benson et al. (U.S. Patent 5,574,845), who describe a system for analyzing and viewing video data based upon models of the video sequence, including time, space, object and event, the event model being most similar to the subject of the current invention. In the '845 patent, the event model is defined as a sequence of possibly-overlapping episodes, each of which is characterized by elements from time and space models which also describe the video, and objects from the object model of the video. However, this description of the video is a strictly structural one, in that the models of the video developed in '845 do not take into account the syntactic, semantic, or semiotic content or significance of the 'events' depicted in the video. Benson et al. describe the use of structural tags to control access to and viewing of the video data.

What is required is a method and system for selectively viewing video content, based upon a existing thematic analysis of the content, using interactive selection of one or more thematic elements.

### SUMMARY OF THE INVENTION

The current invention utilizes interactive selection of themes or thematic elements from an audio-visual work, to control the content and sequence of the viewing of segments of the work.

### BRIEF DESCRIPTION OF THE DRAWINGS

FIG. 1 is a system diagram for interactive viewing of video.
FIG. 2 is a representation of structural and thematic annotation.
FIG. 3 is an initial screen for viewing an annotated work.
FIG. 4 is a dialog for specifying thematic viewing choices.
FIG. 5 is a schematic illustration of a video and viewing timeline of a portion of the video work selected according to teachings of the present invention.

### DETAILED DESCRIPTION

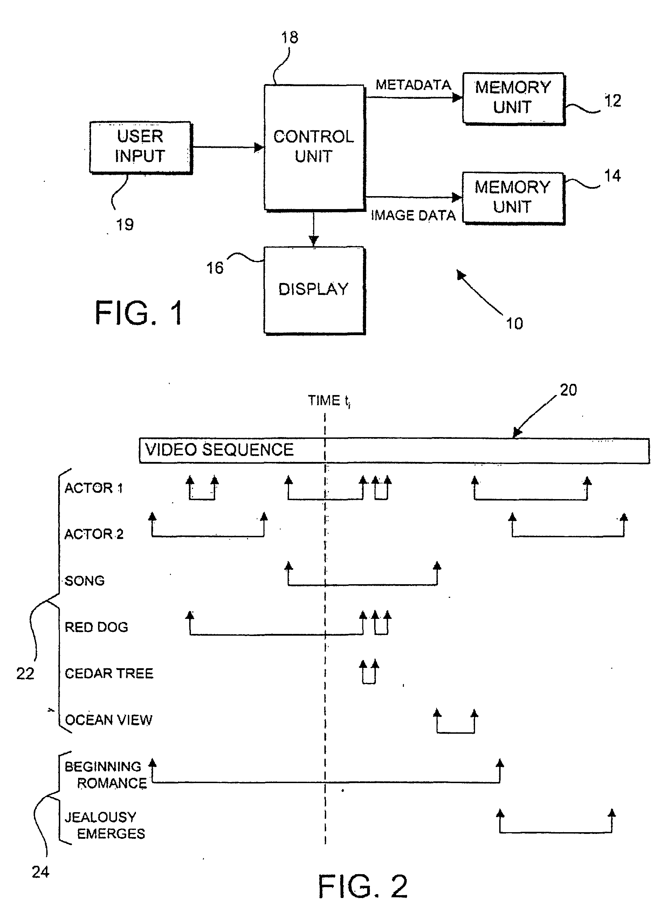

The elements of the current system are shown generally at 10 in FIG. 1. A control processor reads metadata, from a memory device such as memory unit 12, which describes the structure and content of a film or video work. The film or video content is stored in a memory device, such as a random access disk or solid-state memory unit 14, or may be stored concurrently with the metadata in memory unit 12. The content is comprised of a sequence of time-coded video frames that are arranged to play in a default order to display the entire work. The content and the thematic data need not reside on the same physical device, but may be accessed via a network or other communication medium.

By means of an interactive display 16, a control processor 18 presents to the viewer a series of user interface control screens by which the user selects one or more segments of the video to be viewed. The top level selection may be the entire video; but more relevant to the current invention is the ability to present a series of thematic or structural choices to the user, who can then select one or more of these optional views of the work. Under interactive control such as through a remote control device or other user input device 19, the user can then proceed to view the portions of the work appropriate to the criteria selection, whereby the appropriate video segments are: (1) read from the memory unit, (2) decompressed, and then (3) presented with appropriate annotation to the viewer.

The structure of the thematic metadata is shown schematically in FIG. 2. Throughout the course of the work, multiple themes will typically intertwine, so that selection of a theme may involve segments of video from various portions of the work. When a menu of themes is presented to the user, the selections are extracted from the metadata file stored in memory 12. The thematic annotation may be organized in a hierarchy, and the user may be afforded the opportunity to select an element from one level of the hierarchy, or a multiplicity of elements from a multiplicity of levels of the hierarchy. Various interface methods common in the art may be utilized for this purpose.

For any frame in the work, a multiplicity of annotations may apply, including first-order structural elements such as scene start or end, presence of an object or actor, type of action or content, presence of a song, presence of closed captioning information, and so forth. Additional higher-order thematic elements may also apply, including for example character-specific segments, action or musical elements, expository passages, and combinations of these elements. These first- and higher-order elements may overlap in general ways.

The example in FIG. 2 demonstrates several salient characteristics of the annotation elements within a video sequence 20 that moves in time from left-to-right. Every frame of the work has associated with it at least one structural element, and one thematic element. The structural elements 22 shown in FIG. 2 are objectively determinable elements - such as the appearance within certain frames of the work of actor 1, actor 2, a song, a red dog, a cedar tree, or an ocean view - whose existence within the work are easily determined and can be automated by an appropriate apparatus. Thematic elements 24 are those subjective elements that drive the development of the storyline of the work, such as the beginning romance between characters within the work, or that portion where jealousy between the characters emerges. Although not explicitly shown in FIG. 2, the thematic elements may overlap, as where the romance portion and jealousy portion begins. For instance, earlier scenes of the work showing a past boyfriend or girlfriend may be appropriate to the jealousy theme as well as the romance theme. Structural and thematic elements may also overlap in arbitrary ways.

FIG. 2 illustrates the example that at time tᵢ, the structural elements 'actor 1', 'song', and 'red dog' exist within the video frame time-coded at time tᵢ, and the thematic element 'beginning romance' exists simultaneous with the structural elements at that time. Note that the themes may exist independent of the objects within the frame so that, for instance, the thematic development of the romance between actor 1 and actor 2 may continue at time tᵢ despite the non-existence of actor 2 within the video frame time-coded at t₁. Note also that the thematic element 'jealousy emerges' does not begin until a later time-coded sequence of video frames.

When a thematic selection is presented to the user, the selection may be accompanied by a keyframe taken from the work. This keyframe may be read from the compressed video data using means already known in the art, and then displayed either as an underlay to the selection dialog, or as a thumbnail within the selection dialog.

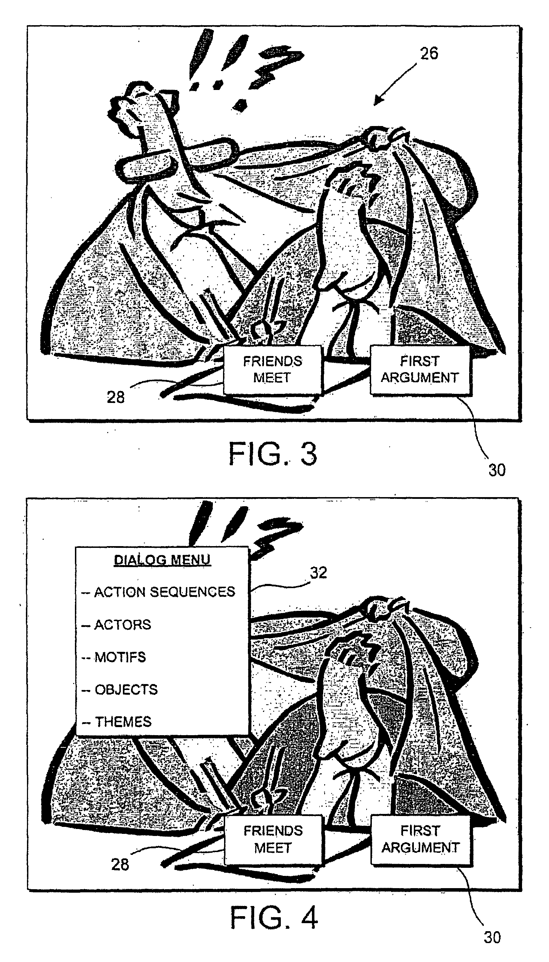

FIG. 3 shows how the display might look when a work is first opened. The opening frame of the movie is displayed as a still image 26, and two buttons appear 28, 30 on the bottom of the screen 16. The two buttons are part of the button bar control, which at any time during the display of the movie permits the user to step forward or backward in the time line. At the beginning of the work, there is no previous scene, so the (previous) button normally shown to the left of button 28 is not displayed. The labels in the buttons indicate the content of the particular thematic element being displayed, here 'friends meet' for button 28, and "first argument" for button 30.

Interaction with the control application may be by means of button presses on either a wired or wireless remote control, or a wired or wireless keyboard. A pair of left/right buttons or a left/right rocker switch on the user input means. 19 (FIG. 1) permits the user to move forward and backward in the timeline of the work. Another key press may initiate an interactive dialog menu 32, shown in FIG. 4, which permits the user to select one or more thematic element to view.

Choices in the top-level thematic dialog window 32 may lead to submenus, each of which may provide additional or alternative choices, and lead to further submenus. For example, selection of 'Actors' at the top level may lead to a menu of choices of main characters, with a selection on that submenu leading to a further submenu of choices of minor characters. At each level, exclusive or inclusive choices may be made, so that combinations of selections may be made which result in combinations of thematic elements being presented. This selection feature has three primary embodiments: that of union, intersection, and exclusion. Multiple selections of overlapping portions of the work - whether object-theme, theme-theme, object-object, or otherwise - may if desired result in the retrieval for viewing from memory 14 of time-coded video frames associated only with the overlapping portions of the selected categories. Alternately, multiple category selection may result in the retrieval for viewing from memory 14 of time-coded video frames associated with any one of the multiple selected categories. Finally, inclusive and exclusive ("NOT") choices can be made which result in the retrieval and playback of video frames that include certain selected objects and/or themes and exclude other selected objects and/or themes.

Another aspect of the current invention is the display of video and accompanying annotation when multiple themes or categories of annotation are selected. For example, in the case shown in FIG. 4, if 'Actor 1' and 'Actor 2' were both selected for viewing or browsing, the display sequence may include all those segments belonging to either of these objects. The label shown during the play of any frame of the video could be the label of that selected and visualized segment that starts most recently relative to the frame. Here, when the 'Actor 1' and 'Actor 2' themes are playing concurrently, the label associated with the first 'Actor 2' segment would be displayed, until the start of the first 'Actor 1' segment', at which time the label for the first 'Actor 1' segment would be displayed, having been shown as the label of the 'next' button during the display of the first 'Actor 2' segment. Since the first 'Actor 2' segment continues after the first 'Actor 1' segment, the label for the first 'Actor 2' segment would appear on both the 'previous and 'next' buttons during the play of the first 'Actor 1' segment. Once the end of the first 'Actor 1' segment was reached, the first 'Actor 2' segment would continue to play to its conclusion, with the appropriate label shifts. This would be followed by a jump to the second 'Actor 1' segment.

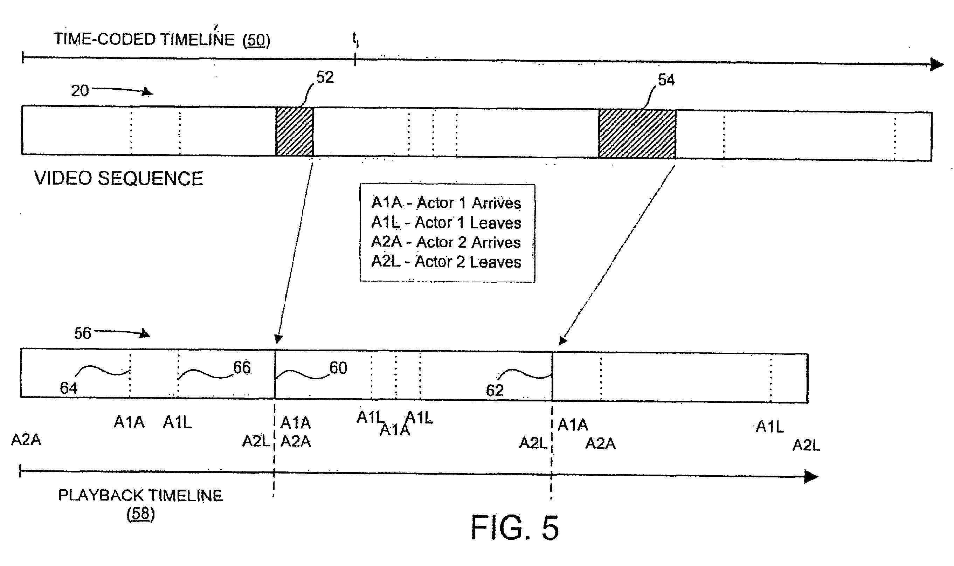

FIG. 5 illustrates the above sequence with reference to the objects and themes shown in FIG. 2. The video sequence timeline is shown at 50 and includes mapped thereon the time-coded video frames making up the video sequence 20. The video sequence shown in FIG. 5 includes two video segments 52, 54 shown in cross-hatching that do not include therein either Actor 1 or Actor 2. As these two objects have been selected by the user for viewing, all video frames having either Actor 1 or Actor 2 are retrieved from memory 14 and assembled for play without interruption as a portion 56 of the entire work on playback timeline 58. The solid lines 60, 62 in video sequence portion 56 denote a non-sequential jump in time-coded frames owing to not playing portions 52 and 54 from the original video sequence 20. The dotted lines in both video sequence 20 and portion 56 denote boundary cues where the selected objects and/or themes begin or end an association with frames on their respective timelines 50, 58. For instance, dotted line 64 denotes the frame within the video sequence segment 56 in which Actor 1 first appears on screen with Actor 2, and dotted line 66 denotes the frame in which Actor 1 later moves off-screen.

Annotative display is responsive to the cue frames - such as transition frames 64 and 66 - where the content button appearing on the screen just before frame 64 would be reflective of the thematic and object selections made. The annotations may be different for a particular frame depending upon which combination of object and theme elements are selected for viewing by the user of the video system. For instance, if Actor 1 and Actor 2 are selected, then only those annotations associated with those objects would appear on the screen. Similarly, if a theme is also selected, then the appropriate annotations associated with the objects and the selected theme are retrieved from memory, such as from a table stored in metadata memory 12, and displayed on the screen in synchronicity with the display of the particular video segments.

As an example of the above, filters can be AND (union) or OR (intersection) so that thematic annotations are different depending upon which objects are chosen and whether union or intersection is chosen. Selecting Actor 1 AND Actor 2 would result in displaying all frames in the base video sequence that has either Actor 1 in it, or Actor 2. Annotative buttons appearing on the screen with the video payback include text appropriate not only to the scene currently played, but also the filter choices made. An example of one type of simple annotation is by "scene number". Thus, there may be only 7 scenes in which Actor 1 and Actor 2 both appear and the buttons may have the numbers "1", "2", "3", etc. displayed on them. A more complex set of annotations reflect the relationship between the objects and/or themes selected so that, as shown in FIG. 3, the thematic annotations for state "friends meet" and in the next segment "first argument".

In contrast, if the filters included Actor 1 and object "Red Dog" from the sequence shown in FIG. 2, the annotations may instead be reflective of the relationship between Actor 1 and the red dog and thus be different for a particular video frame shared by both selection of actor 1 and actor 2, and of actor 1 and red dog, e.g. the video frame with time-coded at time tᵢ.

Thematic viewing of a work could be combined with a number of control metaphors known in the art, including for example selectable pull-down lists of thematic elements, permitting random access to segments of the work in addition to the sequential access described above.

The notion of thematic viewing can apply to the viewing of multiple distinct video segments related by a thematic analysis - that is, thematic viewing can occur across multiple works. The second work, like the first work, is stored within a memory, such as memory 14, as a second sequence of time-coded video frames arranged to play in a default order to display the second entire work. Metadata associated with the second work are defined and stored as noted above and include thematic categories, at least some of which are in common with the thematic categories of the first entire work. The portion of the second work associated with the selected categories may then be displayed for viewing concurrent with the portion selected from the first such work. Accordingly, for instance, a romance that blossoms between two characters in a television series that spans multiple episodes can be retrieved from memory and strung together to form a seamless display of a new video sequence related only to the romance complete with appropriate annotations.

The same thematic principles could be applied to other works of art or education, including for example operatic or orchestral works, writings, poetry, text or multimedia training manuals, games, trivia, news broadcasts or archives, animation sequences, sporting events, disjoint collections of media, or internet search results. Again, such thematic principals are not readily apparent from the content of the frames themselves but rather require expert interpretation of the syntactic, semantic, or semiotic content or significance of the 'events' depicted in the video.

Other schemes for segment labeling are possible. The developer of the thematic annotation may be provided a mechanism for specifying the label to be applied at each moment of the video, possibly with context sensitivity to the set of thematic elements being shown. The label content may depend upon the type and subtype of the segment, may be unique to the particular segment, and/or may depend on the other thematic elements shown at the same time.

This method of thematic viewing can be the basis for a trivia game, with interaction built into the. viewing process. The interaction may, but not necessarily, affect the order in which the appropriate video segments are displayed. For instance, if the use is in a trivia game with multiple video segments tied together to present a complete game, the question order can be presented according to some algorithm where the contestants in a particular match have answered the questions in one particular order but the viewer may want to see the questions presented in a different order. The step of displaying the portion of the entire work occurs at least partially independent of the time-coded order of the video frames. Accordingly the thematic content may be temporally variable, or may vary according to some algorithm, thus producing a temporally-varied interactive experience.

Having described and illustrated the principles of the invention in a preferred embodiment thereof, it should be apparent that the invention can be modified in arrangement and detail without departing from such principles. We claim all modifications and variation coming within the spirit and scope of the following claims.

## Claims

1. A computer-implemented method for use by a user for management of video data in a stored video stream, said video stream including a plurality of video shots wherein each shot comprises a sequence of frames, said method comprising the steps of:
storing within a memory a sequence of time-coded video frames arranged to play in a default order to display an entire work;
defining and storing in memory metadata associated with the video frames comprised of a plurality of possibly overlapping thematic categories;
displaying for selection to the user a list of the plurality of thematic categories; and
selecting for viewing a portion of said entire work associated with the selected thematic category.

2. The method of claim 1, further comprising:
correlating the metadata stored in the memory with the user-selected thematic category; and
retrieving for viewing from memory the time-coded video frames associated with the user-selected thematic category.

3. The method of claim 1, further comprising the step of displaying the portion of the entire work according to the time-coded order of the video frames.

4. The method of claim 1, further comprising the step of displaying the portion of the entire work at least partially independent of the time-coded order of the video frames.

5. The method of claim 1, further comprising storing with the metadata annotations for segments of the entire work associated with the content of those segments, wherein segments are comprised of a plurality of consecutive time-coded video frames.

6. The method of claim 5, wherein the annotations for particular segments are different depending upon the selected thematic category.

7. The method of claim 1, .further comprising:
storing within a memory a second sequence of time-coded video frames arranged to play in a default order to display a second entire work;
defining and storing in memory metadata associated with the second sequence of video frames comprised of a plurality of thematic categories in common with said thematic categories of said first entire work; and
selecting for viewing a portion of said second entire work, concurrent with the portion of said first entire work, associated with the selected thematic category.

8. The method of claim 1, further comprising the steps of selecting two or more thematic categories having overlapping portions thereof and retrieving for viewing from memory the time-coded video frames associated with said overlapping portions.

9. The method of claim 1, further comprising the steps of selecting two or more thematic categories and retrieving for viewing from memory the time-coded video frames associated with any one of said selected thematic categories.

10. The method of claim 1, wherein said thematic categories at least partially overlap so that a plurality of video frames are simultaneously associated with at least two themes.

11. A method for displaying programmatic content comprising the steps of:
indexing within a table segments of the programmatic content using at least two possibly overlapping thematic categories;
enabling user selection of at least one of the thematic categories for viewing;
arranging the segments of programmatic content into a video sequence responsive to the user-selected thematic category; and
displaying the video sequence in substantial synchronicity with annotative information associated with a currently viewed segment of the video sequence.
